(19) Europäisches Patentamt
European Patent Office
Office européen des brevets

(11) **EP 3 760 896 B1**

(12) **EUROPEAN PATENT SPECIFICATION**

(45) Date of publication and mention
of the grant of the patent:
**12.01.2022 Bulletin 2022/02**

(51) Int Cl.:
*F16G 5/06* (2006.01)   *D02G 3/26* (2006.01)
*D02G 3/44* (2006.01)   *F16G 5/20* (2006.01)

(21) Application number: **19778137.0**

(22) Date of filing: **20.03.2019**

(86) International application number:
**PCT/JP2019/011825**

(87) International publication number:
**WO 2019/188701 (03.10.2019 Gazette 2019/40)**

(54) **RAW-EDGE V-BELT**

FLANKENOFFENER KEILRIEMEN

COURROIE EN V À BORD NON FINI

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **30.03.2018 JP 2018068458**

(43) Date of publication of application:
**06.01.2021 Bulletin 2021/01**

(73) Proprietors:
• **Bando Chemical Industries, Ltd.**
**Kobe-shi, Hyogo 650-0047 (JP)**
• **HONDA MOTOR CO., LTD.**
**Minato-ku**
**Tokyo 107-8556 (JP)**

(72) Inventors:
• **KATO Hideyuki**
**Kobe-shi, Hyogo 650-0047 (JP)**
• **ASUMI Michio**
**Wako-shi, Saitama 351-0193 (JP)**
• **KOMURO Hirokazu**
**Wako-shi, Saitama 351-0193 (JP)**

(74) Representative: **Germain Maureau**
**12, rue Boileau**
**69006 Lyon (FR)**

(56) References cited:
**WO-A1-2017/061100    JP-A- 2012 036 521
JP-A- 2015 152 101**

EP 3 760 896 B1

**Description**

TECHNICAL FIELD

The present invention relates to a raw edge V-belt for transmission.

BACKGROUND ART

Rubber-made raw edge V-belts have been used as a power transmission member for a transmission of a two-wheeled vehicle. For example, Patent Document 1 discloses, as a type of such a raw edge V-belt for transmission, a double-cogged V-belt in which a cord that shrinks at a shrinkage rate of 1.2% or more to 2.0% or less when thermally treated at 120°C for one hour is embedded in order to reduce a change in the transmission ratio over time.

CITATION LIST

PATENT DOCUMENTS

Patent Document 1: WO 2015/121907
Patent document 2: JP 2012 036521 A

SUMMARY OF THE INVENTION

The present invention is directed to a raw edge V-belt for transmission and includes: a V-belt body made of rubber, both sides of the V-belt body in a belt width direction serving as a pulley contact surface; and a cord embedded in the V-belt body so as to form a helical pattern having a pitch in the belt width direction. The cord is made of a plied yarn obtained by first twisting, in one direction, each of a plurality of filament bundles, each being made of polyester fibers of 2000 dtex or more to 3000 dtex or less, to make a plurality of first-twist yarns, paralleling the plurality of first-twist yarns, and second twisting the plurality of first-twist yarns in a direction opposite to the first twisting. A shrinkage force per dtex of the polyester fibers forming the cord, generated in a belt length of 300 mm when the raw edge V-belt is held in a temperature atmosphere of 120°C for one hour is 0.0015 N or more.

BRIEF DESCRIPTION OF THE DRAWINGS

FIG. 1 is a perspective view illustrating a piece of a double-cogged V-belt according to an embodiment.
FIG. 2 is a cross-sectional view of the double-cogged V-belt according to the embodiment along a belt width direction.
FIG. 3 is a cross-sectional view of the double-cogged V-belt according to the embodiment along a belt length direction.
FIG. 4 is a graph showing a relationship between a shrinkage force per dtex of polyester fibers that form a cord and a ratio change rate.

DESCRIPTION OF EMBODIMENTS

An embodiment will be described in detail below.

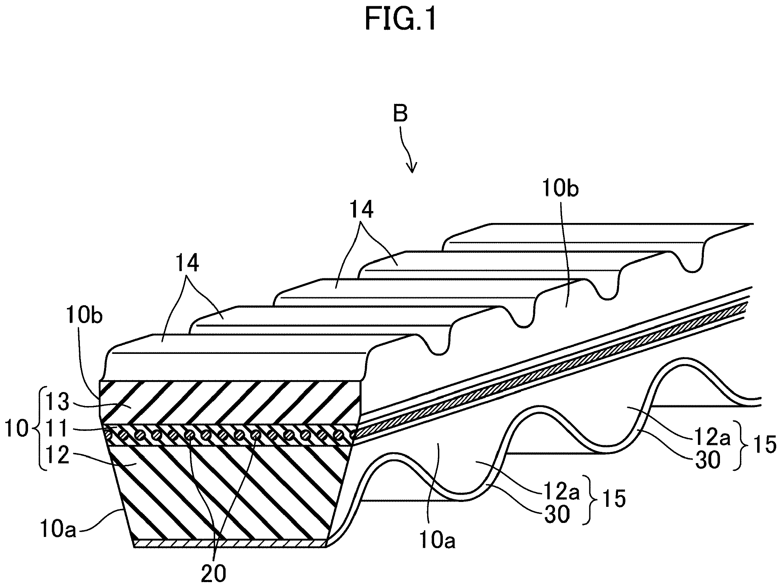

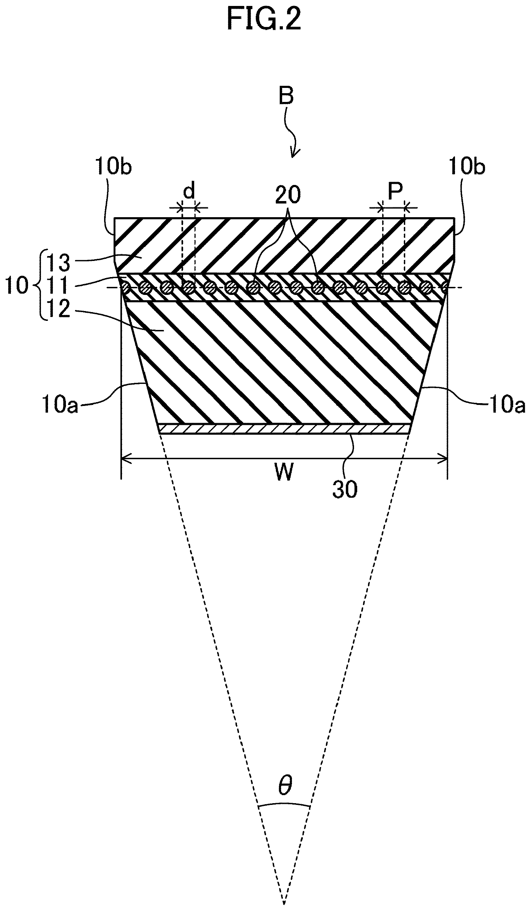

FIGS. 1 to 3 illustrate a double-cogged V-belt B (raw edge V-belt) according to an embodiment. The double-cogged V-belt B according to the embodiment is, for example, a rubber-made endless belt which is used as a power transmission member for a transmission of a two-wheeled vehicle. The double-cogged V-belt B according to the embodiment has a length of 500 mm or more to 1200 mm or less, a maxim width of 16 mm or more to 30 mm or less, and a maximum thickness of 8.0 mm or more to 12.0 mm or less, for example.
The double-cogged V-belt B according to the embodiment includes a V-belt body 10 made of rubber, a cord 20, and a reinforcing fabric 30.
The V-belt body 10 is formed into a shape whose cross-sectional shape along a belt width direction is a combined and stacked shape of an isosceles trapezoid near the inner circumferential side of the belt and a horizontal rectangle near the outer circumferential side of the belt. Each of both side surfaces of the V-belt body 10 includes a inclined surface 10a and a vertical surface 10b. The inclined surface 10a corresponds to an oblique side of the isosceles trapezoid and inclines inward with respect to the belt thickness direction. The vertical surface 10b corresponds to a short side of the horizontal rectangle and extends in the belt thickness direction. Among these surfaces, the inclined surface 10a serves as a pulley contact surface. The angle θ formed by the inclined surfaces 10a serving as the pulley contact surfaces on both sides are 24° or more to 36° or less, for example.

The V-belt body 10 includes a flat strip-like adhesive rubber layer 11 disposed in a middle portion in a belt thickness direction, a compressed rubber layer 12 formed on the inner circumferential side of the adhesive rubber layer 11, and a stretch rubber layer 13 formed on the outer circumferential side of the adhesive rubber layer 11. The inclined surface 10a serving as the pulley contact surface includes side surfaces of the adhesive rubber layer 11 and the compressed rubber layer 12 and part of a side surface of the stretch rubber layer 13 on the inner circumferential side. The vertical surface 10b includes the remaining part of the side surface of the stretch rubber layer 13. The compressed rubber layer 12 includes, on its inner circumferential side, lower cog forming portions 12a at a constant pitch. The cross-sectional shape of each of the lower cog forming portions 12a along the belt length direction has a sine curve shape. The stretch rubber layer 13 includes, on its outer circumferential side, upper cogs 14 at a constant pitch. The cross-sectional shape of each of the upper cogs 14 along the belt length direction has a rectangular shape. Each of the upper cogs 14 has, for example, a height of 1.2 mm or more to 2.5 mm or less, and a width of 2.0 mm or more to 5.0 mm or less. The upper cogs 14 are arranged at a pitch of 4.0 mm or more to 6.0 mm or less.

The adhesive rubber layer 11, the compressed rubber layer 12, and the stretch rubber layer 13 are made of a rubber composition produced by heating and pressing an uncrosslinked rubber composition prepared by kneading a rubber component and various compound ingredients added to the rubber component, and then crosslinking the kneaded product with a crosslinking agent. Examples of the rubber component include chloroprene rubber (CR), chlorosulfonated polyethylene rubber (CSM), hydrogenated acrylonitrile-butadiene rubber (H-NBR), and an ethylene-α-olefin elastomer (such as EPDM and EPR). Among these substances, chloroprene rubber is suitable. Examples of the compound ingredients include a reinforcing material, a filler, an antioxidant, a softener, a crosslinking agent, a vulcanization accelerator, and a vulcanization accelerator aid. The adhesive rubber layer 11, the compressed rubber layer 12, and the stretch rubber layer 13 may be made of the same rubber composition or different rubber compositions. To increase the rigidity in the belt width direction, the rubber composition that forms the compressed rubber layer 12 and the stretch rubber layer 13 may contain, as a reinforcing material, short fibers oriented in the belt width direction. Suitably, the rubber composition that forms the compressed rubber layer 12 and the stretch rubber layer 13 has a hardness of A80 or more to less than A90 measured with a type A durometer in accordance with JIS K6253-3: 2012.

The cord 20 is embedded in a middle portion in the thickness direction of the adhesive rubber layer 11 of the V-belt body 10 such that the cord 20 forms a helical pattern having a pitch in the belt width direction. The outer diameter d of the cord 20 in the belt width direction is suitably 0.7 mm or more to 1.3 mm or less, more suitably 0.9 mm or more to 1.1 mm or less. The arrangement pitch P of the cord 20 in the belt width direction is suitably 0.8 mm or more, and suitably 1.30 mm or less, more suitably 1.25 mm or less, and even more suitably 1.20 mm or less.

The cord 20 is made of a plied yarn obtained by first twisting, in one direction, each of a plurality of filament bundles, each being made of polyester fibers of 2000 dtex or more to 3000 dtex or less, to make a plurality of first-twist yarns, paralleling the plurality of first-twist yarns, and second twisting the plurality of first-twist yarns in a direction opposite to the first twisting. The number of the first-twist yarns is suitably two or more to four or less, more suitably three.

The fiber fineness of the first-twist yarns of the cord 20 is suitably 2000 dtex or more to 2500 dtex or less, more suitably 2100 dtex or more to 2300 dtex or less, even more suitably 2200 dtex. The first-twist factor of the cord 20 obtained by the following equation is suitably 2.0 or more to 3.0 or less and more suitably 2.4 or more to 2.8 or less. Suitably, the fiber fineness and the first-twist factor are the same among the plurality of first-twist yarns.

$$K = T \times \sqrt{D/1.1}$$

$K$ : Twist Factor
$T$ : Twist Times (times/10 cm)
$D$ : Fiber Fineness (dtex)

The fiber fineness of the cord 20 is suitably 6000 dtex or more to 7500 dtex or less, more suitably 6300 dtex or more to 6900 dtex or less, even more suitably 6600 dtex. The second-twist factor of the cord 20 obtained by the above equation is suitably 2.3 or more to 3.5 or less, more suitably 2.7 or more to 3.1 or less. Suitably, the second-twist factor is larger than the first-twist factor. The ratio of the second-twist factor to the first-twist factor (second-twist factor/first-twist factor) is suitably 0.8 or more to 1.8 or less, more suitably 1.0 or more to 1.3 or less.

Suitably, the cord 20 undergoes, prior to the molding of the belt, at least one of an adhesion treatment of the cord 20 being soaked in a base treatment agent containing an epoxy compound or an isocyanate compound and heated, an adhesion treatment of the cord 20 being soaked in an RFL aqueous solution and heated, or an adhesion treatment of the cord 20 being soaked in rubber cement and dried, in order to impart adhesion to the adhesive rubber layer 11 of the V-belt body 10.

The reinforcing fabric 30 covers an inner circumferential surface of the compressed rubber layer 12 of the V-belt body 10. The reinforcing fabric 30 and the lower cog forming portions 12a of the compressed rubber layer 12 covered with the reinforcing fabric 30 form lower cogs 15. Each of the lower cogs 15 has, for example, a height of 3.4 mm or more to 5.0 mm or less, and a width of 3.0 mm or more to 6.0 mm or less. The lower cogs 15 are arranged at a pitch of 7.0 mm or more to 11.0 mm or less.

The reinforcing fabric 30 has a thickness of 0.1 mm or more to 1.0 mm or less, for example. The reinforcing fabric 30 is made of a woven fabric or a knitted fabric, for example. Examples of the fiber material forming the reinforcing fabric 30 include aliphatic polyamide fibers, aramid fibers, polyester fibers, and cotton.

Suitably, the reinforcing fabric 30 undergoes, prior to the molding of the belt, at least one of an adhesion treatment of the reinforcing fabric 30 being soaked in a base treatment agent containing an epoxy compound or an isocyanate compound and heated, an adhesion treatment of the reinforcing fabric 30 being soaked in an RFL aqueous solution and heated, an adhesion treatment of the reinforcing fabric 30 being soaked in rubber cement and dried, or an adhesion treatment of coating a surface of the reinforcing fabric 30 toward the V-belt body 10 with high-viscosity rubber cement and drying the surface, in order to impart adhesion to the compressed rubber layer 12 of the V-belt body 10.

The strength of the double-cogged V-belt according to the embodiment is suitably 5000 N or more and more suitably 6000 N or more.

When the double-cogged V-belt B of the embodiment is held in a temperature atmosphere of 120°C for one hour, the shrinkage force per dtex of the polyester fibers forming the cord 20 in the belt length of 300 mm is 0.0015 N or more. The shrinkage force is suitably 0.0016 N or more, more suitably 0.0017 N or more. The shrinkage force is suitably 0.0030 N or less. The shrinkage force is obtained by dividing the shrinkage force of the double-cogged V-belt of the embodiment, generated in a belt length of 300 mm when the belt is held in a temperature atmosphere of 120°C for one hour, by the total fiber fineness of the polyester fibers forming the cord 20 per belt width. The total fiber fineness, per belt width, of the polyester fibers forming the cord 20 is obtained as follows: a belt width W (i.e., a belt pitch width) of a portion where the cord 20 is embedded is divided by the arrangement pitch P of the cords 20, thereby obtaining the number of cords 20, and the number of cords 20 is multiplied by the fiber fineness of the polyester fibers of each cord 20.

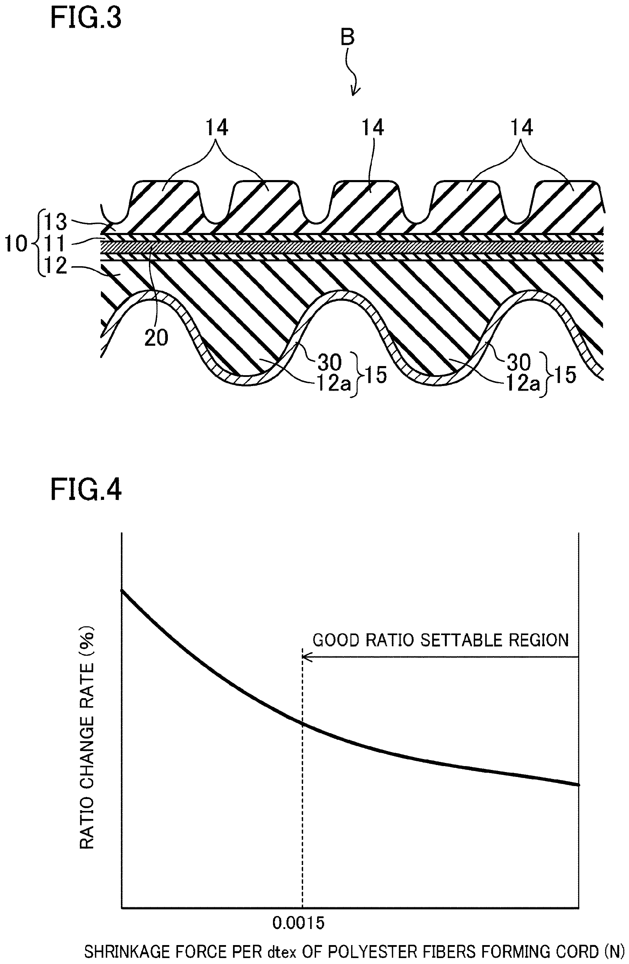

The inventors of the present application studied various raw edge V-belts for transmission, in particular, double-cogged V-belts, which are required to reduce change in the transmission ratio over time, and found a factor having dominant effects on such change in the transmission ratio over time. That is, the polyester fibers forming the cord 20 shrink when the belt is held in a high temperature atmosphere, and the present inventors found that the magnitude of the shrinkage force per dtex of the polyester fibers, generated when the shrinkage occurred was the factor that has dominant effects in reducing the ratio change rate. In view of this, the double-cogged V-belt B of the embodiment is configured such that when the belt B is held in a temperature atmosphere of 120°C for one hour, the shrinkage force per dtex of the polyester fibers forming the cord 20 in the belt length of 300 mm is 0.0015 N or more. This configuration can reduce the change in the transmission ratio over time, as shown in FIG. 4.

The double-cogged V-belt B of the above embodiment can be produced by known methods.

The double-cogged V-belt B has been described as a non-limiting example in the above embodiment, and the belt may also be a single-cogged V-belt or a raw edge V-belt without cogs.

In the above embodiment, the reinforcing fabric 30 covers only the inner circumferential surface of the compressed rubber layer 12 as a non-limiting example. The reinforcing fabric may cover only the outer circumferential surface of the stretch rubber layer 13 or may cover both of the inner circumferential surface of the compressed rubber layer 12 and the outer circumferential surface of the stretch rubber layer 13. Alternatively, none of the inner circumferential surface of the compressed rubber layer 12 and the outer circumferential surface of the stretch rubber layer 13 may be covered with the reinforcing fabric.

Example

(Double-Cogged V-Belt)

<Example>

A double-cogged V-belt prepared as Example had a configuration similar to that of the above embodiment except that the lower cog forming portions, made of rubber, served as lower cogs without the reinforcing fabric. A cord of the double-cogged V-belt of Example was formed as follows: two filament bundles each made of polyester fibers of 1100 dtex were put together to obtain a filament bundle of 2200 dtex, made of the polyester fibers, and the thus obtained filament bundle was first twisted in the S direction at a first-twist factor of 2.6 to make a first-twist yarn; and three of the first-twist yarn were paralleled and second twisted in the Z direction at a second-twist factor of 2.9 to make a plied yarn having a fiber fineness of 6600 dtex (1100/2 × 3). The plied yarn was used as the cord with an arrangement pitch of 1.15 mm.

The double-cogged V-belt of Example had a length of 800 mm, a maxim width of 21 mm, and a maximum thickness of 10 mm. The angle formed by the inclined surfaces serving as pulley contact surfaces on both sides was 32°. Each of the adhesive rubber layer, the compressed rubber layer, and the stretch rubber layer was made of a rubber composition containing chloroprene rubber (CR) as a rubber component. The rubber composition that formed the compressed rubber layer and the stretch rubber layer contained meta-aramid short fibers oriented in the belt width direction, and had a hardness of A85 measured with a type A durometer in accordance with JIS K6253-3: 2012. The lower cogs each had a height of 4.0 mm, a width of 5.0 mm, and an arrangement pitch of 7.5 mm. The upper cogs each had a height of 2.0 mm, a width of 3.0 mm, and an arrangement pitch of 5.7 mm. The outer diameter of the cord in the belt width direction was 1.0 mm. The cord underwent an adhesion treatment of the cord being soaked in a base treatment agent containing an isocyanate compound and heated, an adhesion treatment of the cord being soaked in an RFL aqueous solution and heated, and an adhesion treatment of the cord being soaked in rubber cement and dried.

<Comparative Example>

A double-cogged V-belt prepared as Comparative Example had a configuration similar to that of Example except that a cord of the double-cogged V-belt of Comparative Example was formed as follows: two filament bundles each made of polyester fibers of 1100 dtex were put together to obtain a filament bundle of of 2200 dtex, made of the polyester fibers, and the thus obtained filament bundle was first twisted in the S direction at a first-twist factor of 2.6 to make a first-twist yarn; five of the first-twist yarn were paralleled and second twisted in the Z direction at a second-twist factor of 2.9 to make a plied yarn having a fiber fineness of 11000 dtex (1100 dtex/2 $\times$ 5); and the plied yarn was used as the cord with an arrangement pitch of 1.50 mm. In the double-cogged V-belt of Comparative Example, the outer diameter of the cord in the belt width direction was 1.2 mm. The double-cogged V-belt of Comparative Example had the same configuration as that of the belt 1 of the example disclosed in Patent Document 1.

[Table 1]

| | | Example | Comparative Example |
|---|---|---|---|
| Cord | Twisted Yarn Structure | 1100/2 $\times$ 3 | 1100/2 $\times$ 5 |
| | Fiber Fineness of First-Twist Yarn | 2200 dtex | 2200 dtex |
| | Fiber Fineness of Cord | 6600 dtex | 11000 dtex |
| | First-Twist Factor | 2.6 | 2.6 |
| | Second-Twist Factor | 2.9 | 2.9 |
| | Second-Twist Factor/First-Twist Factor | 1.1 | 1.1 |
| | Arrangement Pitch | 1.15 mm | 1.50 mm |
| | Outer Diameter in Belt Width Direction | 1.0 mm | 1.2 mm |
| Belt | Shrinkage Rate | 1.3% | 1.4% |
| | Shrinkage Force | 0.0018 N | 0.0010 N |
| | Transmission Efficiency (Relative Value) | 111 | 100 |
| | Ratio Change Rate (Relative Value) | 71 | 100 |

(Test Method)

<Shrinkage Rate>

Each of the double-cogged V-belts of Example and Comparative Example was placed in a heating furnace, with the temperature set to 120°C, and was kept there for one hour. A shrinkage rate, which is a percentage of a difference between belt lengths before and after the heating to the belt length before the heating, was calculated.

<Shrinkage Force>

Strip-like test pieces of the double-cogged V-belts of Example and Comparative Example were prepared. A tensile tester with a chamber was used. The ambient temperature in the chamber was set to 120°C, and the distance between chucks in the chamber was set to 300 mm. Each of the test pieces was held between the chucks, and an initial load of 45 N was applied to the test piece, which was kept in that state for one hour. A shrinkage force of the belt was measured after one hour with a load cell, and the shrinkage force was divided by the total fiber fineness of the polyester fibers forming the cord per belt width. The total fiber fineness, per belt width, of the polyester fibers forming the cord was obtained as follows: a belt pitch width was divided by the arrangement pitch of the cords, thereby obtaining the number of cords, and the number of cords was multiplied by the fiber fineness of the polyester fibers of each cord.

<Transmission Efficiency>

Each of the double-cogged V-belts of Example and Comparative Example was wrapped around a drive pulley and a driven pulley having a variable winding diameter, and the drive pulley was rotated at 3000 rmp with the torque of the drive shaft of 4 N·m to cause the belt to run. An input rotational speed ($N_1$), input torque ($Tr_1$), an output rotational speed ($N_2$), and output torque ($Tr_2$) in the case of the same winding diameters of the drive pulley and the driven pulley were measured, and the transmission efficiency was calculated based on the following equation (1). The transmission efficiency of each of Example and Comparative Example was relatively evaluated using the transmission efficiency of Comparative Example as 100.

$$\text{Transmission Efficiency} = \frac{N_2 \times Tr_2}{N_1 \times Tr_1} \times 100 \qquad \cdots (1)$$

<Ratio Change Rate>

Each of the double-cogged V-belts of Example and Comparative Example was wrapped around a drive pulley and a driven pulley having a variable winding diameter, and the drive pulley was rotated at 5000 rmp with the torque of the drive shaft of 8 N·m to cause the belt to run. An input rotational speed ($N_1$) and an output rotational speed ($N_2$) immediately after the start of the belt running in the case of the same winding diameters of the drive pulley and the driven pulley, and an input rotational speed ($N_1$') and an output rotational speed ($N_2$') after 200-hour belt running were measured. A change rate (i.e., a ratio change rate) of the transmission ratio was calculated based on the following equation (2). The change rates (i.e., the ratio change rates) of the transmission ratios of Example and Comparative Example were relatively evaluated using the ratio change rate of Comparative Example as 100.

$$\text{Ratio Change Rate} = \left( \frac{N_1'}{N_2'} - \frac{N_1}{N_2} \right) \div \frac{N_1}{N_2} \times 100 \qquad \cdots (2)$$

(Test Results)

The test results are shown in Table 1.
Table 1 shows that the shrinkage rates in the case of holding in a high temperature atmosphere are substantially the same in Example and Comparative Example. However, comparing Example with Comparative Example, the shrinkage force per dtex of the polyester fibers forming the cord, generated when the test piece is held in the high temperature atmosphere, is higher in Example by about 80% than in Comparative Example. In Example, which shows a higher shrinkage force, the transmission efficiency is higher by 11% and the ratio change rate is 71%, compared with Comparative Example. This demonstrates that, in Example, the change in the transmission ratio over time is very small in addition to the higher transmission efficiency.

INDUSTRIAL APPLICABILITY

The present invention is useful in the technical field of a raw edge V-belt.

DESCRIPTION OF REFERENCE CHARACTERS

B    Double-Cogged V-Belt
10    V-Belt Body

| 10a | Inclined Surface (Pulley Contact Surface) |
| 10b | Vertical Surface |
| 11 | Adhesive Rubber Layer |
| 12 | Compressed Rubber Layer |
| 12a | Lower Cog Forming Portion |
| 13 | Stretch Rubber Layer |
| 14 | Upper Cog |
| 15 | Lower Cog |
| 20 | Cord |
| 30 | Reinforcing Fabric |

**Claims**

1.  A raw edge V-belt for transmission, the raw edge V-belt comprising:

    a V-belt body made of rubber, both sides of the V-belt body in a belt width direction serving as a pulley contact surface; and
    a cord embedded in the V-belt body so as to form a helical pattern having a pitch in the belt width direction, wherein the cord is made of a plied yarn obtained by first twisting, in one direction, each of a plurality of filament bundles, each being made of polyester fibers of 2000 dtex or more to 3000 dtex or less, to make a plurality of first-twist yarns, paralleling the plurality of first-twist yarns, and second twisting the plurality of first-twist yarns in a direction opposite to the first twisting,
    **characterized by**
    a shrinkage force per dtex of the polyester fibers forming the cord, generated in a belt length of 300 mm when the raw edge V-belt is held in a temperature atmosphere of 120°C for one hour is 0.0015 N or more.

2.  The raw edge V-belt of claim 1, wherein
    the cord has fiber fineness of 6000 dtex or more to 7500 dtex or less.

3.  The raw edge V-belt of claim 1 or 2, wherein
    the number of first-twist yarns are two or more to four or less.

4.  The raw edge V-belt of any one of claims 1 to 3, wherein
    the cord is arranged at a pitch of 1.30 mm or less in the belt width direction.

5.  The raw edge V-belt of any one of claims 1 to 4, wherein
    the cord has an outer diameter of 0.7 mm or more to 1.3 mm or less in the belt width direction.

6.  The raw edge V-belt of any one of claims 1 to 5, wherein the cord has a first-twist factor of 2.0 or more to 3.0 or less.

7.  The raw edge V-belt of any one of claims 1 to 6, wherein the cord has a second-twist factor of 2.3 or more to 3.5 or less.

8.  The raw edge V-belt of any one of claims 1 to 7, wherein
    a ratio of the second-twist factor of the cord to the first-twist factor of the cord is 0.8 or more to 1.8 or less.

9.  The raw edge V-belt of any one of claims 1 to 8, wherein
    the second-twist factor of the cord is greater than the first-twist factor of the cord.

10. The raw edge V-belt of any one of claims 1 to 9, wherein the raw edge V-belt has a strength of 5000 N or more.

**Patentansprüche**

1.  Flankenoffener Keilriemen für einen Transmissionsantrieb, wobei der flankenoffene Keilriemen umfasst:

    einen Keilriemenkörper, der aus Gummi hergestellt ist, wobei beide Seiten des Keilriemenkörpers in einer Riemenbreitenrichtung als Riemenscheibe-Kontaktoberfläche dienen; und

einen Zugstrang, der in dem Keilriemenkörper eingebettet ist, sodass er ein Spiralmuster bildet, das eine Steigung in der Riemenbreitenrichtung aufweist, wobei

der Zugstrang aus einem verzwirnten Garn hergestellt ist, das durch eine erste Verdrillung, in einer ersten Richtung, jedes einer Vielzahl von Fadenbündeln, wobei jedes aus Polyesterfasern mit 2000 dtex oder mehr bis 3000 dtex oder weniger hergestellt ist, um eine Vielzahl von erstverdrillten Garnen herzustellen, eine Parallellegung der Vielzahl von erstverdrillten Garnen und eine zweite Verdrillung der Vielzahl von erstverdrillten Garnen in einer Richtung, die der ersten Verdrillung entgegengesetzt ist, erhalten wird,

**gekennzeichnet durch** eine Schrumpfkraft pro dtex der Polyesterfasern, die den Zugstrang bilden, generiert in einer Riemenlänge von 300 mm, wenn der flankenoffene Keilriemen in einer Temperaturatmosphäre von 120°C für eine Stunde gehalten wird, 0,0015 N oder mehr beträgt.

2. Flankenoffener Keilriemen nach Anspruch 1, wobei der Zugstrang eine Faserfeinheit von 6000 dtex oder mehr bis 7500 dtex oder weniger aufweist.

3. Flankenoffener Keilriemen nach Anspruch 1 oder 2, wobei die Anzahl erstverdrillter Garne zwei oder mehr bis vier oder weniger beträgt.

4. Flankenoffener Keilreimen nach einem der Ansprüche 1 bis 3, wobei der Zugstrang in einer Steigung von 1,30 mm oder weniger in der Riemenbreitenrichtung angeordnet ist.

5. Flankenoffener Keilreimen nach einem der Ansprüche 1 bis 4, wobei der Zugstrang einen Außendurchmesser von 0,7 mm oder mehr bis 1,3 mm oder weniger in der Riemenbreitenrichtung aufweist.

6. Flankenoffener Keilreimen nach einem der Ansprüche 1 bis 5, wobei der Zugstrang einen Erstverdrillungsfaktor von 2,0 oder mehr bis 3,0 oder weniger aufweist.

7. Flankenoffener Keilreimen nach einem der Ansprüche 1 bis 6, wobei der Zugstrang einen Zweitverdrillungsfaktor von 2,3 oder mehr bis 3,5 oder weniger aufweist.

8. Flankenoffener Keilreimen nach einem der Ansprüche 1 bis 7, wobei ein Verhältnis des Zweitverdrillungsfaktors des Zugstrangs zum Erstverdrillungsfaktor des Zugstrangs 0,8 oder mehr bis 1,8 oder weniger beträgt.

9. Flankenoffener Keilreimen nach einem der Ansprüche 1 bis 8, wobei der Zweitverdrillungsfaktor des Zugstrangs größer ist als der Erstverdrillungsfaktor des Zugstrangs.

10. Flankenoffener Keilreimen nach einem der Ansprüche 1 bis 9, wobei der flankenoffene Keilriemen eine Festigkeit von 5000 N oder mehr aufweist.

**Revendications**

1. Courroie trapézoïdale à bord brut pour transmission, la courroie trapézoïdale à bord brut comprenant :

un corps de courroie trapézoïdale réalisé en caoutchouc, les deux côtés du corps de courroie trapézoïdale dans la direction de la largeur de courroie servant de surface de contact avec la poulie ; et

une corde intégrée dans le corps de courroie trapézoïdale de manière à former un motif hélicoïdal ayant un pas dans la direction de la largeur de courroie, où

la corde est réalisée en un fil retors obtenu par une première torsion, dans une direction, de chacune d'une pluralité de faisceaux de filaments, chacun étant réalisé en fibres de polyester de 2000 dtex ou plus à 3000 dtex ou moins, pour réaliser une pluralité de fils à première torsion, par la mise en parallèle de la pluralité de fils à première torsion, et par une deuxième torsion de la pluralité de fils à première torsion dans une direction opposée à la première torsion,

**caractérisée par**

une force de retrait par dtex des fibres de polyester formant la corde, générée dans une longueur de courroie de 300 mm lorsque la courroie trapézoïdale à bord brut est maintenue dans une atmosphère à température de 120°C pendant une heure est supérieure ou égale à 0,0015 N.

2. Courroie trapézoïdale à bord brut selon la revendication 1, dans laquelle la corde a une finesse de fibre de 6000 dtex ou plus à 7500 dtex ou moins.

3. Courroie trapézoïdale à bord brut selon la revendication 1 ou 2, dans laquelle le nombre de fils à première torsion est de deux ou plus à quatre ou moins.

4. Courroie trapézoïdale à bord brut selon l'une quelconque des revendications 1 à 3, dans laquelle la corde est agencée selon un pas inférieur ou égal à 1,30 mm dans la direction de la largeur de courroie.

5. Courroie trapézoïdale à bord brut selon l'une quelconque des revendications 1 à 4, dans laquelle la corde a un diamètre extérieur de 0,7 mm ou plus à 1,3 mm ou moins dans la direction de la largeur de courroie.

6. Courroie trapézoïdale à bord brut selon l'une quelconque des revendications 1 à 5, dans laquelle la corde a un coefficient de première torsion de 2,0 ou plus à 3,0 ou moins.

7. Courroie trapézoïdale à bord brut selon l'une quelconque des revendications 1 à 6, dans laquelle la corde a un facteur de deuxième torsion de 2,3 ou plus à 3,5 ou moins.

8. Courroie trapézoïdale à bord brut selon l'une quelconque des revendications 1 à 7, dans laquelle un rapport du facteur de deuxième torsion de la corde sur le facteur de première torsion de la corde est de 0,8 ou plus à 1,8 ou moins.

9. Courroie trapézoïdale à bord brut selon l'une quelconque des revendications 1 à 8, dans laquelle le facteur de deuxième torsion de la corde est supérieur au facteur de première torsion de la corde.

10. Courroie trapézoïdale à bord brut selon l'une quelconque des revendications 1 à 9, dans laquelle la courroie trapézoïdale à bord brut a une résistance supérieure ou égale à 5000 N.

# FIG.1

# FIG.2

FIG.3

B

14        14        14

13
10 { 11
12

20

30
12a } 15    30
12a } 15

FIG.4

RATIO CHANGE RATE (%)

GOOD RATIO SETTABLE REGION

0.0015

SHRINKAGE FORCE PER dtex OF POLYESTER FIBERS FORMING CORD (N)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2015121907 A
- JP 2012036521 A